(19) Europäisches Patentamt / European Patent Office / Office européen des brevets

(11) **EP 4 429 900 B1**

(12) **EUROPEAN PATENT SPECIFICATION**

(45) Date of publication and mention
of the grant of the patent:
**01.04.2026  Bulletin 2026/14**

(21) Application number: **22802728.0**

(22) Date of filing: **07.11.2022**

(51) International Patent Classification (IPC):
**B60C 9/00** *(2006.01)*     **B60C 1/00** *(2006.01)*
**B60C 9/02** *(2006.01)*     **B60C 9/04** *(2006.01)*

(52) Cooperative Patent Classification (CPC):
**B60C 9/005; B60C 1/0041; B60C 9/0042;**
**B60C 9/0292;** B60C 2009/0078; B60C 2009/0276;
B60C 2009/0425; B60C 2009/0433;
B60C 2009/0475; B60C 2200/10

(86) International application number:
**PCT/IB2022/060679**

(87) International publication number:
**WO 2023/079518 (11.05.2023 Gazette 2023/19)**

(54) **TYRE FOR MOTORCYCLES**

REIFEN FÜR MOTORRÄDER

PNEU POUR MOTOCYCLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **08.11.2021  IT 202100028292**

(43) Date of publication of application:
**18.09.2024  Bulletin 2024/38**

(73) Proprietor: **Pirelli Tyre S.p.A.**
**20126 Milano (IT)**

(72) Inventors:
• **MENI, Fabio**
**20126 Milano (IT)**
• **PARENTE, Rocco**
**20126 Milano (IT)**
• **RESMINI, Emiliano**
**20126 Milano (IT)**
• **TOTTI, Tommaso**
**20126 Milano (IT)**

(74) Representative: **Porta & Consulenti Associati
S.p.A.**
**Via Winckelmann, 1**
**20146 Milano (IT)**

(56) References cited:
WO-A1-2021/090152     CN-A- 107 531 943
DE-A1- 102009 024 592     JP-A- 2013 116 644
US-A1- 2006 137 797     US-B2- 10 576 784

**Description**

<u>Field of the invention</u>

The present invention relates to a motorcycle tyre.

In particular, the present invention relates to a tyre for motorcycles that belongs to the categories typically identified as hypersport, supersport, "sport touring", having a large-displacement (e.g., 600 cm$^3$ or larger), and/or having high power (for example 100 horsepower or larger), also used on track, as well as a tyre for racing motorcycles.

<u>Related art</u>

WO 2011/012944, in the name of the Applicant, discloses a motorcycle tyre comprising a radial carcass comprising textile cords made of lyocell fibers. According to such document, a tyre can be controlled during a manoeuvre to change direction and/or speed, at an inflation pressure comprised between 60% and 90% of the low-load reference value in normal driving, using textile cords capable of providing a controlled elastic response substantially comprised between about 140 N and about 200 N for an elongation of about 3 percent and substantially comprised between about 170 N and about 240 N for an extension of about 4%.

WO 2020/128934, in the name of the Applicant, discloses a motorcycle tyre comprising a radial carcass comprising a plurality of reinforcing cords comprising a first end and a second end twisted together, wherein the first end is a hybrid yarn comprising a plurality of first filaments mixed with a plurality of second filaments having respective moduli different from each other, and the second end is a textile yarn comprising a plurality of third filaments made of at least one material having a third modulus.

In embodiments, the first filaments are made of aramidic material, the second filaments are made of a material selected from the group comprising: polyethylene terephthalate (PET), polyethylene naphthalate (PEN), Nylon, Rayon whereas the third filaments are made of aramidic material.

WO 2016/174628 A1, in the name of the Applicant, discloses a motorcycle tyre comprising a carcass structure comprising at least one carcass layer provided with reinforcement elements which generally consist of textile cords, such as rayon, nylon, polyester (for example, polyethylene naphthalate, PEN).

US 2010/006200 A1 discloses an eco tyre for passenger cars comprising a carcass composed of at least one ply of cords, preferably a rayon cord ply rubberized by a topping rubber comprising natural rubber and silica as the filler material.

WO 2015/097582 A1, in the name of the Applicant, discloses a motorcycle tyre comprising a carcass structure which comprises at least one carcass layer comprising textile reinforcement elements obtained by means of cords having, in a load/elongation diagram, an elastic response of at least 55 N at an elongation of about 2%. Preferably, the textile reinforcement elements can be composed of fibres of natural or synthetic origin, selected from Rayon, Lyocell, polyesters (for example PEN, PET, PVA), aromatic polyamides (for example aramids such as Twaron®, Kevlar®), separately or mixed. Preferably, the fibrous material for obtaining the textile reinforcement elements of the carcass layer is selected from Polyester, Rayon, Lyocell, Aromatic polyamides or a hybrid formed by combining yarns of two or more of the aforesaid materials.

US 2013/139940 A1 discloses a tyre for passenger cars, tyre for motorcycles and tyre for light trucks provided with a band on top of a belt structure, which band is provided with reinforcing cords which may be composite cords obtained by twisting an aramid fiber and a nylon fiber together, or a single twisted cord of a polyethylene naphthalate fiber.

US 2006/137797 A1, in the name of the Applicant, discloses a motorcycle tyre comprising a radial carcass comprising at least one carcass ply which generally consists of a plurality of reinforcing cords arranged parallel to each other and at least partially coated with a layer of elastomeric material. The reinforcing cords are usually made of textile fibres, for example rayon, nylon, polyethylene naphthalene-2,6-dicarboxylate (PEN), polyethylene terephthalate (PET), or of steel wires stranded together, coated with a metal alloy (for example copper/zinc, zinc/manganese, zinc/molybdenum/cobalt alloys and the like).

WO 2021/090152 A1, in the name of the Applicant, discloses a motorcycle tyre comprising a radial carcass comprising reinforcing elements included in a carcass layer made of textile cords, selected from those usually adopted in the manufacture of carcasses for tyres, for example Nylon, Rayon, PET, PEN, Lyocell cords, with an elementary filament having a diameter of between 0.35 mm and 1.5 mm, or steel metal cords with an elementary filament having a diameter of between 0.10 mm and 0.5 mm.

<u>Summary of the invention</u>

One of the requirements for motorcycle tyres is the ability to adhere to the ground, so as to effectively discharge to the ground the drive torque which the tyres are subjected to and, therefore, achieve a thrust and an effective braking force.

Such tyres must also be light and provide an adequate response to the stresses which the tyre is subjected to while travelling along a bend.

Tyres for motorcycles typically comprise a radial carcass structure extending between opposite bead structures, a belt structure arranged at a radially outer position with respect to the carcass structure, possibly consisting of or comprising a zero-degree reinforcing layer arranged at a radially outer position with respect to the carcass structure, and a tread band arranged at a radially outer position with respect to the belt structure.

The carcass structure is intended to impart to the tyre the desired characteristics of structural integrity and strength, whereas the belt structure, besides contributing in conferring the aforementioned characteristics of structural integrity and strength, is intended to transfer to the carcass structure the lateral and longitudinal stresses which the tyre is subjected to during travel as a result of contact with the road surface, so as to confer to the tyre the desired characteristics of performance (i.e. grip, driving stability, controllability, directionality, road holding) and comfort. The zero-degree reinforcing layer, when present, on the other hand, is intended to limit the radial deformation of the belt structure.

Tyres for motorcycle wheels are typically characterized by a high transversal curvature, so as to offer an adequate contact surface with the road surface when the motorcycle is inclined to travel along a bend.

Such tyres, in addition to supporting the weight of the motorcycle in all travel conditions (thus including the weight of the driver and any load), must ensure driving stability, controllability, directionality, and travel stability, under all conditions, in other words while traveling on a straight stretch, while traveling along a bend, while entering a bend, while exiting a bend, and during braking.

The controllability of the motorcycle as perceived by the rider, thus the performance the rider is able to achieve, depends on the grip of the motorcycle under all travel conditions and is therefore related to the footprint area. The stability of the footprint area, i.e. its ability to remain as constant as possible, is given by the stiffness of the tyre. The more rigid the tyre, the less the tyre deforms, the faster the tyre recovers deformations during stresses, and, therefore, the more stable the footprint area, the more predictable the behaviour of the tyre.

For the reasons outlined above, in tyres for motorcycle wheels, the construction of the carcass structure is of substantial importance. Indeed, it is the carcass structure that must structurally bear most of the stresses that are transmitted from the road surface to the wheel and vice versa. Therefore, the response of the carcass structure to such stresses affects the overall behaviour of the tyre.

In order to achieve these effects, a plurality of reinforcing cords are usually provided in the carcass structure in order to impart to the same the desired properties of structural strength and stiffness.

Typically, reinforcing cords made of low-modulus textile yarns are used to enhance the drive comfort, possibly at the expense of absolute performance (in terms of directionality and controllability), and to enhance durability, in terms of fatigue resistance, of the tyre.

On the other hand, reinforcing cords made of high-modulus textile yarns are used to enhance absolute performance in terms of driving stability, controllability, directionality, and road holding with sudden changes in direction and/or speed, possibly at the expense of driving comfort and durability in terms of fatigue resistance of the tyre.

Hybrid reinforcing cords are also used in order to try to obtain a trade-off between what can be obtained from reinforcing cords made of low-modulus textile yarns and reinforcing cords made of high-modulus textile yarns. Such hybrid reinforcing cords are made of a first textile yarn and a second textile yarn twisted together, in which the first textile yarn has low modulus and the second textile yarn has high modulus.

As an example of the above, one solution used by the Applicant involves the use of reinforcing cords made of high-modulus textile yarns, specifically aramid or hybrid reinforcing cords made of aramid and PET, in high-performance motorcycle tyres, i.e. intended to be used on motorcycles capable of reaching speeds greater than 270 km/h or having a displacement equal to or greater than 600cm$^3$ and power equal to or greater than 80 kW. Such motorcycles are, for example, those that belong to the categories typically identified as hypersport, supersport, and racing.

The aramidic fibers have a high modulus and thus high stiffness that allows the design profile and thus the best footprint area of the tyre to be maintained during tyre use.

Indeed, the high stiffness of the aramidic fibers allows to counteract the tendency of the carcass structure to deform when subjected to the thrusts generated by the contact of the tyre with the ground.

The tyre in which the carcass structure comprises reinforcing cords made of aramidic or hybrid reinforcing cords made of aramid/PET offers, to the rider, a linear and predictable response making the motorcycle very controllable, so as to allow high performance to be maintained over short distances, typical of sport use.

However, the Applicant has found that tyres with carcass structures made in this way can have some limitations in terms of fatigue resistance when particularly high temperatures are reached.

On the other hand, the same tyre with a carcass structure having reinforcing cords made of low-modulus textile yarns, such as for example PET, Nylon or Rayon, displays excellent fatigue resistance. However, such a tyre is unable to counteract the tendency of the carcass to deform when subjected to the thrusts generated by the contact of the tyre with asphalt, especially during a race or otherwise intensive use.

Therefore, the Applicant's experiences show that, on the one hand, tyres made with a carcass structure comprising low-modulus textile yarns, although suitable for touring use, do not achieve the stiffness values necessary for sports performance. On the other hand, racing tyres made with a carcass structure comprising reinforcing cords made of high-modulus textile yarns, while possessing excellent tensile characteristics may have limited resistance to fatigue.

The Applicant's experiences have also shown that in tyres with a carcass structure comprising reinforcing cords made of high-modulus textile yarns such as aramidic or hybrid reinforcing cords, a rapid performance decay can occur under certain conditions, with significant degradation of the characteristics of grip on the ground and drivability of the tyre.

Lastly, the Applicant has observed that in seeking an optimal compromise between tyre response to the stresses imparted under all driving conditions (as linear and predictable as possible), fatigue resistance, and consistency of performance over time, it is desirable not to penalize other requirements such as the overall weight and cost of the tyre.

The Applicant has surprisingly found that it is possible to achieve adequate stiffness characteristics in a motorcycle tyre while using low-modulus reinforcing cords in the carcass structure, and thus capable to provide a high footprint area, and at the same time have consistency of performance over time, by properly formulating the vulcanized elastomeric material in which the reinforcing cords of the carcass layer(s) are embedded.

In particular, the Applicant has surprisingly found that by providing a vulcanized elastomeric material of the carcass layer(s) having suitable stiffness characteristics (related to the dynamic elastic modulus E') and hysteresis characteristics (related to the tandelta), it is advantageously possible to achieve adequate characteristics of tyre stiffness while still using low-modulus reinforcing cords in the carcass structure.

In addition to this, the Applicant has also surprisingly found that by providing as the vulcanized elastomeric material of the carcass layer(s) a vulcanized elastomeric material incorporating a white silica-based reinforcing filler and a sufficient residual unreacted amount of a silane coupling agent of the white silica-based reinforcing filler it is also possible to limit as much as possible the phenomena of tyre performance decay even in the case of an intensive use of the tyre, such as in a race.

More specifically, the invention relates to a motorcycle tyre comprising:

a carcass structure;

optionally, a belt structure applied at a radially outer position with respect to the carcass structure;

a tread band applied at a radially outer position with respect to the carcass structure and, if present, with respect to the belt structure;

wherein the carcass structure comprises at least one carcass layer;

wherein said at least one carcass layer comprises a plurality of reinforcing cords comprising one or more textile yarns comprising a plurality of textile filaments made of a material selected from rayon, PET, PEN and PEEK, and/or hybrid reinforcing cords comprising a plurality of textile filaments made of a combination of two or more of rayon, PET, PEN and PEEK, incorporated in a vulcanized elastomeric material having a dynamic elastic modulus E' measured at 70°C and 100Hz comprised between 5.0 and 9.0 MPa, preferably between 5.5 and 7.5 MPa, and a tandelta measured at 70°C and 100Hz comprised between 0.130 and 0.170;

and wherein the vulcanized elastomeric material comprises a white silica-based reinforcing filler and a residual unreacted amount of a silane coupling agent of the white silica-based reinforcing filler, expressed as an amount of silicon measured by ICP-OES, greater than or equal to 70 ppm.

Advantageously, the Applicant has experimentally observed that the combination in at least one carcass layer of the aforementioned non-aramidic textile reinforcing cords with a polymeric matrix having the aforementioned stiffness, hysteresis, and formulation characteristics can achieve a degree of cornering stiffness of the tyre which increases the stability of the footprint area and, along therewith, the drivability and responsiveness of the tyre. All this, while achieving a substantial elimination of fatigue resistance problems resulting from the use of textile reinforcing cords made of aramid.

The Applicant has also experimentally observed that the combination in at least one carcass layer of the aforementioned non-aramidic textile reinforcing cords with a polymeric matrix having the aforementioned stiffness, hysteresis, and formulation characteristics can achieve a marked improvement in performance consistency over time.

Without wishing to be bound by any interpretative theory, the Applicant deems that the improvement in the performance consistency over time of the tyre may be ascribed to the action of the unreacted silane coupling agent of the white silica-based reinforcing filler present in the vulcanized elastomeric material in which the aforementioned non-aramidic reinforcing cords are embedded.

In particular, the Applicant deems that the silane coupling agent may be capable to restore disulfide bridges between the polymeric chains generated during vulcanization and that may be partially degraded by the high thermal-mechanical stresses that are developed during an intensive tyre use, such as for example during a race.

Indeed, the Applicant has experimentally observed that in the presence of a residual unreacted amount of the silane coupling agent greater than, or equal to, 70 ppm the performance level of the tyre is effectively and advantageously maintained over time, in particular its cornering stiffness with respect to a known tyre provided with a carcass structure reinforced with aramidic reinforcing cords or hybrid aramid/PET reinforcing cords.

The Applicant has also experimentally observed that the technical effects discussed above can be achieved by using a carcass structure that comprises a single layer, so-called "single-ply carcass" in the tyre, with an advantageous minimization of the weight of the tyre itself.

Advantageously, finally, the use of the aforementioned non-aramidic reinforcing cords, which are much less expensive than the aramidic reinforcing cords or of the hybrid aramid/PET reinforcing cords, allows to reduce the production costs of the tyre, a feature that has always been sought after in the market.

Definitions

For the purposes of the present invention, the dynamic mechanical properties E' and tandelta were measured using an Instron model 1341 dynamic device in the traction-compression mode according to the following methods.

A test piece of cross-linked material (170°C for 15 minutes) having a cylindrical shape (length = 25 mm; diameter = 18 mm) was used, compression preloaded to a longitudinal deformation of 25% with respect to the initial length and kept at the predetermined temperature (for example 23°C, 70°C and 100°C) for the duration of the test.

After a waiting time of 2 minutes followed by a mechanical pre-conditioning of 125 cycles at 100Hz at 7.5% deformation amplitude with respect to the length under preload, the test piece was subjected to a dynamic sinusoidal stress having an amplitude of ± 3.5% with respect to the length under preload, with a frequency of 100Hz.

The dynamic mechanical properties are expressed in terms of dynamic elastic modulus (E') and tandelta (loss factor) values. The tandelta value was calculated as the ratio between the viscous dynamic modulus (E") and the elastic dynamic modulus (E').

For the purposes of the present invention, the values of the amount of silane coupling agent of the white silica-based reinforcing filler are meant to be referred to the unsupported silane coupling agent, i.e. they do not include any supporting fillers (for example carbon black).

For the purposes of the present invention, the values of the unreacted residual amount of the silane coupling agent of the white silica-based reinforcing filler are meant to be expressed as the amount of silicon measured by ICP-OES with a measurement tolerance of ±15%.

For the purposes of the present invention, the term "cornering stiffness" is used to indicate the derivative of the lateral force expressed by the tyre with respect to the slip angle.

More specifically, for a given load applied to a tyre, the lateral force $F_y$ developed by the tyre in cornering to counteract lateral acceleration increases with the slip angle $\alpha$. At low values of the slip angle $\alpha$ (lower than 8°), the relationship between the force developed and the slip angle is linear and can be defined as:

$$F_y = C_\alpha \cdot \alpha$$

The proportionality constant Cα is known as "cornering stiffness" (also referred to hereafter as Ky) and is defined as the slope of the Fy curve with respect to $\alpha$ at $\alpha$ = 0.

Cornering stiffness Ky is one of the parameters typically measured to evaluate the performance of a tyre in terms of drivability and stability, and thus defines the variation of the lateral force expressed by the tyre as the slip angle $\alpha$ changes. Therefore, a tyre provided with high cornering stiffness Ky will be able to develop high lateral forces $F_y$ even at low values of the slip angle $\alpha$.

The value of the cornering stiffness Ky is influenced by the stiffness of the tyre structure, and a very important tyre component in this regard is, as outlined above, the carcass structure.

For the purposes of the present invention, the term "slip angle" is used to indicate the angle formed between the longitudinal axis parallel to the direction of the wheels and the actual path traveled by the motorcycle. The factors that determine and characterize the slip angle are centrifugal force in cornering, side wind, and slope of the road surface, and together they generate transversal forces on the tyres, which, for this reason, deform in the area of contact with the ground. The value of the slip angle increases as the load on the tyre decreases and as the tyre inflation pressure value decreases.

The term "motorcycle tyre" is used to indicate a tyre having a high curvature ratio (typically greater than 0.2), capable of achieving high camber angles (for example 50°-60°) during cornering of the motorcycle.

The term "curvature ratio" is used to indicate the ratio between the distance comprised between the radially highest point of the tread band and the maximum radial section width (also called the "maximum cord") of the tyre, and the same maximum width of the tyre, in a cross section of the tyre. Tyres for rear wheels of high-performance motorcycles have a curvature ratio substantially equal to or greater than about 0.32.

The term "equatorial plane" of the tyre is used to indicate a plane perpendicular to the axis of rotation of the tyre and dividing the tyre into two symmetrically equal parts.

The term "camber angle" is used to indicate the angle between the equatorial plane of the tyre mounted on the motorcycle wheel and a plane orthogonal to the road surface.

The terms "radial" and "axial" and the expressions "radially inner/outer" and "axially inner/outer" are used, respectively, with reference to a direction substantially parallel to the equatorial plane of the tyre and a direction substantially perpendicular to the equatorial plane of the tyre, i.e. to a direction substantially perpendicular to the axis of rotation of the tyre and a direction substantially parallel to the axis of rotation of the tyre.

The terms "circumferential" and "circumferentially" are used with reference to the direction of the annular development of the tyre, i.e. to the rolling direction of the tyre, which corresponds to a direction lying in a plane coinciding with or substantially parallel to the equatorial plane of the tyre.

The term "substantially axial direction" is used to indicate a direction inclined, with respect to the equatorial plane of the tyre, by an angle comprised between 70° and 90°.

The term "substantially circumferential direction" is used to indicate a direction oriented, with respect to the equatorial plane of the tyre, at an angle comprised between 0° and 30°.

Within the framework of the present description and in the following claims, all the numerical entities indicating quantities, parameters, percentages, and so forth are to be considered preceded in every circumstance by the term "about" unless indicated otherwise. Further, all the ranges of numerical entities include all the possible combinations of maximum and minimum numerical values and all the possible intermediate ranges, in addition to those specifically indicated hereinbelow.

Unless otherwise indicated, all ranges of numerical entities also include maximum and minimum numerical values.

Within the framework of the present description and in the following claims, the term "phr" (an acronym for parts per hundred parts of rubber) indicates the parts by weight of a given component of elastomeric material per 100 parts by weight of the elastomeric polymer considered net of possible extender plasticizer oils.

The terms "elastomeric material", "rubber", "elastomeric polymer", or "elastomer" are used to indicate a material comprising a vulcanizable natural or synthetic polymer and a reinforcing filler, wherein such a material, at room temperature and after having been subjected to vulcanization, is able to undergo deformations caused by a force and is capable of quickly and energetically recovering the substantially original shape and size after the deforming force has been removed (according to the definitions of standard ASTM D1566-11 Standard Terminology Relating To Rubber).

The term "reinforcing cord", or more simply "cord", is used to indicate an element consisting of one or more "textile yarns".

The term "textile yarn" is used to indicate the aggregation of a plurality of textile filaments. Each filament can also be referred to as a "fiber".

The textile yarns may have one or more "ends", where the term "end", when referring to a textile yarn, is used to indicate a bundle of filaments made of the same material and aggregated in such a way as to be twisted together (i.e. a yarn twisted back on itself). Preferably, a textile yarn involves a single end or at least two ends twisted together.

The yarns can be identified by an abbreviation representing the textile material, the count of the fiber used and the number of ends that combine to form the yarn. For example, a yarn with ends made of PET (polyethylene terephthalate) identified as PET 2442 indicates a yarn comprising PET fibers with a count of 2440 dtex, consisting of two ends twisted together.

The expression "hybrid reinforcing cord" is used to indicate a reinforcing cord made up of at least two materials that are different from each other. In the context of the present invention, therefore, a hybrid reinforcement cord comprises a plurality of textile filaments made of a combination of two or more of rayon, PET, PEN and PEEK.

In a first embodiment, a hybrid reinforcement cord can be made by aggregating yarns formed by different materials, for example by twisting.

In alternative embodiments, a hybrid reinforcement cord can be made by aggregating "hybrid yarns" or by aggregating yarns formed by the same material with hybrid yarns.

The expression "hybrid yarn" is used to indicate a multi-filament yarn obtained from a first yarn and at least one second yarn, each comprising a plurality of filaments, in which the filaments of the first yarn are "mixed" with the filaments of the at least one second yarn, in which the filaments of the first yarn are made of a single material, in which the filaments of the at least one second yarn are made of a single material, and in which the material of the filaments of the first yarn is different from the material of the filaments of the at least one second yarn.

The term "mixed" is used to indicate that the individual filaments of the first yarn and the individual filaments of the at least one second yarn are randomly arranged side-by-side and/or alternating with each other or in any case arranged with respect to each other in an essentially random scheme. The term "linear density" or "count" of a cord or of a yarn or of a plurality of filaments is used to indicate the mass of the cord or of the yarn or of the plurality of filaments per unit length as evaluated by the BISFA method (The International Bureau For The Standardization Of Man-Made Fibres, 1995 edition) developed for the specific material.

Linear density can be expressed in dtex (grams per 10 km length).

The term "diameter" or "thickness" of a cord or thread is used to indicate the thickness of these elements measured as prescribed by the Method BISFA E10.

The cross-sectional area of a cord is calculated geometrically by multiplying the number of textile yarns that constitute the cord by the geometric cross-sectional area of each textile yarns, for example in the case of equal strands A= $n_{yarns}*d^2*\pi/4$ where A is the cross-sectional area of the cords, $n_{yarns}$ is the number of textile yarns that make up the cord, d is the diameter of the textile yarn, and $\pi$ is the Greek constant P.

The expression "elongation at break" of a reinforcing cord or textile yarn is used to indicate the percentage elongation at which breaking occurs, evaluated with the method BISFA E6 developed for the specific material.

The expression "tensile strength" of a reinforcing cord is used to indicate the load at which breaking occurs, evaluated by the aforementioned method BISFA E6. The expression "tangent modulus" is used to indicate the ratio between load and elongation measured at any point on a load-elongation curve according to the standard BISFA E6. Such a curve is drawn by calculating the first derivative of the load-elongation function defining the aforementioned curve, normalized at the linear density expressed in Tex. Therefore, the modulus is expressed in cN/Tex.

In a load-elongation graph, the modulus is thus identified by the slope of the aforementioned curve with respect to the x-axis.

The expression "initial tangent modulus" is used to indicate the tangent modulus calculated at the origin point of the load-elongation curve, i.e. for an elongation equal to zero.

The term "high modulus" is used to indicate an initial tangent modulus equal to or greater than 3000 cN/Tex. The term "low modulus" is used to indicate an initial tangent modulus lower than 3000 cN/Tex.

The expression "toughness" of a reinforcing cord or yarn is used to indicate the calculated ratio between modulus and linear density. The toughness is measured according to the standard BISFA related to the material subjected to testing as defined below.

For the purposes of the present invention, for the measurement of linear density, initial tangent modulus, and in general for determining the tensile properties, particularly the toughness, reference is made to flat textile yarns, without twists applied in testing, according to the BISFA-standardized tests.

In particular:

- for reinforcing cords or textile yarns made of aramid (Ar) material: BISFA - Methods for testing yarns of para-aramidic fibers 2002 edition

    Determination of the linear density: Chapter 6

    Determination of the tensile properties: Chapter 7 - Testing procedure: Paragraph 7.5 with initial pretensioning procedure

    Tractions carried out with a Zwick - Roell Z010 dynamometer

- for reinforcing cords or textile yarns made of polyester (PET, PEN) and polyether ether ketone (PEEK): BISFA - Methods for testing polyester yarns - 2004 edition
  Determination of the tensile properties: Chapter 7 - Procedure A

- Preparation of laboratory samples: Sample preparation in relaxation - paragraph 7.4.1.1 => preparing samples on collapsible reel

    Preparation of laboratory samples and performance of the test: Manual test - paragraph 7.5.2.1 => c)

    Start procedure => e) pretension at start of procedure

    Tractions carried out with a Zwick - Roell Z010 dynamometer

- for reinforcing cords or textile yarns made of cellulosic material, for example Rayon (Ry): BISFA - Test methods for viscose, cupro, acetate, triacetate and lyocell fiber yarns - 2007 edition

Determination of the tensile properties: Chapter 7 - Test conditions under tension: Dry oven test - Table 7.1 - Test procedure - Paragraph 7.5 - with test on samples under relaxation in a dry oven - sub-paragraph 7.5.2.4.

The term "footprint area" of the tyre is used to indicate the portion of the tyre in contact with the road surface when the tyre is mounted on a wheel rim and a predetermined vertical load is exerted on the tyre.

The term "radial carcass structure" is used to indicate a carcass structure comprising a plurality of reinforcing cords, each oriented, in a crown portion of the tyre, along a substantially axial direction. Such reinforcing cords may be embedded in a single carcass layer, or ply, or in multiple carcass layers or plies (preferably two) radially overlapping each other.

The term "crossed belt structure" is used to indicate a belt structure comprising a first belt layer including reinforcing cords substantially parallel to each other and inclined with respect to the equatorial plane of the tyre by a predetermined angle and at least a second belt layer arranged at radially outer position with respect to the first belt layer and including reinforcing cords substantially parallel to each other but oriented, with respect to the equatorial plane of the tyre, with opposite inclination to that of the reinforcing cords of the first layer.

The term "zero-degree reinforcing layer" is used to indicate a reinforcing layer comprising at least one reinforcing cord wound according to a substantially circumferential winding direction.

The term "structural element" of a tyre is used to indicate any ply or layer of the tyre containing reinforcing cords, such as for example a carcass ply.

The term "thread count" of a structural element of the tyre is used to indicate the number of reinforcing cords per unit length present in such a component. The thread count can be measured in cords/dm (number of cords per decimeter).

Hereinafter, when discussing the adhesion capability of a textile reinforcement cord, and more generally of elongated elements, to the elastomeric material, it will be intended to indicate the adhesion capability conferred to the textile reinforcement cord solely by its shape or structure, thus without considering surface coating treatments of adhesive compositions.

In the tyre manufacturing industry, it is known to use adhesive compositions, for example Resorcinol-Formaldehyde-Latex (RFL) composition, in order to promote adhesion between the elongated elements and the elastomeric material and thus ensure the performance properties of the tyre during its use.

RFL-based adhesive compositions are applied to polymeric elongated elements, generally by dipping in an aqueous RFL-based solution, i.e. an emulsion of rubber latex in an aqueous solution of resorcinol and formaldehyde (or pre-condensed resin obtained by reaction between resorcinol and formaldehyde).

Some materials, such as Rayon, already acquire optimal adhesion properties to the elastomeric composition by means of a single dipping in an RFL-based bath (one-step process) while others, such as polyesters or aromatic polyamides, bind with a greater difficulty to the elastomeric composition and therefore take advantage from special activating pretreatments of a physical or chemical nature. For example, the elongated elements made of polyester or aromatic polyamides undergo surface pre-activation by means of a pre-treatment with a first activating bath (pre-dipping, a two-step process) or by means of a pre-treatment with ionizing rays, plasma or solvents.

The present invention can, in one or more of the aforementioned aspects, have one or more of the preferred features given hereinafter, which can be combined as desired according to the application requirements.

Preferably, the textile reinforcing cords are made of Rayon (RY). More preferably, the textile reinforcing cords are made of RY 2442 25x25 single yarn with two ends, where 25x25 indicates the number of twists of each of the two ends forming the yarn and the number of twists of the yarn formed by the two ends.

Alternatively, the textile reinforcing cords can preferably be made of PET. More preferably, the textile reinforcing cords can be made of PET 1102.

Preferably, the textile reinforcing cords have a linear density greater than, or equal to, 300 dtex, more preferably greater than, or equal to, 400 dtex, even more preferably, greater than, or equal to, 500 dtex.

Preferably, the textile reinforcing cords have a linear density lower than, or equal to, 3500 dtex, more preferably lower than, or equal to, 2500 dtex, even more preferably, lower than, or equal to 2300 dtex.

In preferred embodiments, the textile reinforcing cords have a linear density comprised between 300 dtex and 3500 dtex, more preferably between 400 dtex and 2500 dtex, even more preferably between 500 dtex and 2300 dtex. For example, such a linear density is equal to 1100 dtex or 1670 dtex or 2200 dtex.

In preferred embodiments, the textile reinforcing cords in the carcass layer have a thread count greater than, or equal to, 97 cords/dm and lower than, or equal to, 110 cords/dm.

According to an embodiment, the vulcanized elastomeric material in which the textile reinforcing cords of the aforementioned at least one carcass layer are incorporated is obtained by vulcanizing a vulcanizable elastomeric composition comprising at least one elastomeric diene polymer that is selected, for example, from elastomeric diene polymers commonly used in sulfur-crosslinkable elastomeric compositions (vulcanization) and that are particularly suitable for tyre production, or from elastomeric polymers or copolymers with an unsaturated chain having a glass transition temperature (Tg) normally below 20°C, preferably in the range of 0°C to -110°C.

These polymers or copolymers may be of natural origin or be obtained by solution polymerization, emulsion polymerization, or gas-phase polymerization of one or more conjugated diolefins, optionally mixed with at least one comonomer selected from monovinylarenes and/or polar comonomers.

In preferred embodiments, the vulcanized elastomeric material in which the textile reinforcing cords of the aforementioned at least one carcass layer are incorporated has a dynamic elastic modulus E' measured at 70°C and at 100Hz comprised between 5.5 and 7.5 MPa.

In this way, it is advantageously possible to achieve optimal tyre stiffness characteristics.

In preferred embodiments, the vulcanized elastomeric material in which the textile reinforcing cords of the aforementioned at least one carcass layer are incorporated has a tandelta measured at 70°C and at 100Hz comprised between 0.140 and 0.165.

In this way, it is advantageously possible to achieve optimal hysteresis and thus road holding characteristics of the tyre.

In preferred embodiments, the vulcanized elastomeric material in which the textile reinforcing cords of the aforementioned at least one carcass layer are embedded comprises a residual unreacted amount of said silane coupling agent of the white silica-based reinforcing filler, expressed as an amount of silicon measured by ICP-OES, lower than or equal to 200 ppm, more preferably, comprised between 80 and 200 ppm.

Preferably, the vulcanized elastomeric material in which the textile reinforcing cords of the aforementioned at least one carcass layer are embedded comprises a residual unreacted amount of said silane coupling agent of the white silica-based reinforcing filler, expressed as an amount of silicon measured by ICP-OES, comprised between 90 and 190 ppm.

In this way, it is advantageously possible to optimize the characteristics of resistance to thermal degradation of the vulcanized elastomeric material, limiting the deterioration of tyre performance as much as possible.

According to a preferred embodiment, the Applicant has experimentally observed that the presence, in the elastomeric material used in the aforementioned at least one carcass layer, of a styrene-butadiene elastomeric polymer allows to confer adequate stiffness characteristics to the tyre despite the presence of textile reinforcing cords that are much less stiff than aramid or hybrid aramid/PET reinforcing cords.

This advantageous technical effect seems surprising also in light of the fact that non-aramidic textile reinforcing cords, particularly Rayon cords, are not generally considered in the field capable to impart sufficient stiffness characteristics to the tyre for a sport use.

In a preferred embodiment, the vulcanized elastomeric material in which the textile reinforcing cords of the aforementioned at least one carcass layer are embedded is obtained by vulcanizing a vulcanizable elastomeric composition comprising:

- 100 phr of at least one diene elastomeric polymer comprising an amount comprised between 15 and 40 phr of at least one styrene-butadiene rubber selected from: solution-polymerized styrene-butadiene rubber (S-SBR), emulsion-polymerized styrene-butadiene rubber (E-SBR), carboxylated styrene-butadiene rubber (X-SBR), or mixtures thereof;

- an amount comprised between 2 and 20 phr of said white silica-based reinforcing filler;

- an amount comprised between 1 and 4 phr of said silane coupling agent of said white silica-based reinforcing filler.

Preferably, said at least one diene elastomeric polymer comprises an amount comprised between 20 and 35 phr of said at least one styrene-butadiene rubber.

In this case, it is advantageously possible to achieve the aforementioned desired values of dynamic elastic modulus E' and tandelta of the vulcanized elastomeric material.

Preferably, said styrene-butadiene rubber is an emulsion-polymerized styrene-butadiene rubber (E-SBR).

Preferably, said at least one diene elastomeric polymer comprises an amount comprised between 10 and 85 phr, more preferably, comprised between 40 and 75 phr, of natural rubber (NR).

In this case it is advantageously possible to modulate the vulcanization and in general the stability of the elastomeric material.

In a preferred embodiment, the vulcanizable elastomeric composition comprises an amount comprised between 5 and 15 phr of said white silica-based reinforcing filler.

Preferably, the white silica-based reinforcing filler is selected from silica, silicates, and mixtures thereof.

Preferably, the silica that can be used in the present invention can generally be a pyrogenic silica or, preferably, a precipitated silica, with a BET surface area (measured according to ISO Standard 5794/1) comprised between 50 m$^2$/g and 500 m$^2$/g, preferably between 70 m$^2$/g and 200 m$^2$/g.

The vulcanizable elastomeric composition according to the present invention also comprises at least one silane coupling agent in an appropriate amount capable of being left in the vulcanized polymeric material in the aforementioned amount, expressed as the amount of silicon measured by ICP-OES, greater than, or equal to, 70 ppm.

More specifically, the vulcanizable elastomeric composition according to the present invention comprises a suitable amount of at least one silane coupling agent that is capable of:

- interacting with the white silica-based reinforcing filler present and binding the same to the diene elastomeric polymer during vulcanization, and

- restoring in the vulcanized elastomeric material the bonds between the polymer chains that may have been broken as a result of the thermal-mechanical stresses which the tyre is subjected to.

Preferably, the silane coupling agent used in the present invention is selected from those having at least one hydrolysable silane substituent group, silane that can be identified, for example, by the following general formula (I):

$$(R)_3Si\text{-}C_nH_{2n}\text{-}X \qquad (I)$$

where the groups R, which may be identical or different, are selected from: alkyl groups, alkoxy or aryloxy groups, or halogen atoms, provided that at least one of the groups R is an alkoxy or aryloxy group or a halogen; n is an integer between 1 and 6 inclusive; X is a group selected from: nitrous, mercapto, amino, epoxide, vinyl, imide, chlorine, $-(S)_mC_nH_{2n}$-Si-$(R)_3$ and -S-COR, where m and n are integers between 1 and 6 inclusive and the groups R are defined as above.

Among silane coupling agents, those that are particularly preferred are bis(3-triethoxysilylpropyl)tetrasulfide (TESPT - for example commercially available from Evonik under the trade name Si69) and bis(3-triethoxysilylpropyl) disulfide. Said coupling agents can be used as such or in admixture with an inert filler (for example carbon black) so as to facilitate their incorporation into the vulcanizable elastomeric composition.

Preferably, the vulcanizable elastomeric composition comprises an amount comprised between 2 and 3 phr of said silane coupling agent of the white silica-based reinforcing filler.

In preferred embodiments of the invention, the aforementioned unreacted residual amount of the silane coupling agent of the white silica-based reinforcing filler can be obtained in the vulcanized elastomeric material by means of the following process for producing the vulcanizable elastomeric composition intended to form the vulcanized elastomeric material of the carcass layer.

In a first step, such a process comprises feeding to at least a first mixing apparatus, for example comprising at least one batch mixer and/or at least one continuous mixer, at least the following components of the vulcanizable elastomeric composition: the diene elastomeric polymer and the white silica-based reinforcing filler.

In a second step, such a process comprises mixing and dispersing said components so as to obtain an intermediate elastomeric material.

In a third step, such a process comprises discharging the intermediate elastomeric material from said mixing apparatus.

In a fourth step, such a process comprises feeding to at least a second mixing apparatus, for example comprising at least one batch mixer and/or at least one continuous mixer, the intermediate elastomeric material and the silane coupling agent.

In a fifth step, such a process comprises mixing and dispersing the silane coupling agent in the intermediate elastomeric material by means of the second mixing apparatus so as to obtain the vulcanizable elastomeric composition intended to form the vulcanized elastomeric material of the carcass layer.

In this way, it is advantageously possible to limit the silanization reactions, i.e. an interaction between the silane coupling agent and the white silica-based reinforcing filler, in the preparation steps of the vulcanizable elastomeric composition so as to subsequently obtain, in the vulcanized elastomeric material, the aforementioned unreacted residual amount of the silane coupling agent, expressed as the amount of silicon measured by ICP-OES, greater than, or equal to, 70 ppm.

Within the framework of the present description and in the subsequent claims, such an unreacted residual amount of the silane coupling agent is determined on a sample of vulcanized elastomeric material, taken from a layer of the carcass structure of the tyre, by extracting from the sample of elastomeric material the silane coupling agent that has not reacted by means of a solvent (for example by means of anhydrous ethanol) placed in contact with the sample to be analyzed for a predetermined number of hours according to the following procedure.

- Weigh 2.0 g $\pm$ 0.5 g of sample of vulcanized elastomeric material with the analytical balance
- Fold the sample with the filter paper tightly enough to prevent the sample from falling out.
- Place the sample in a Soxhlet extractor (or a rapid extractor).
- Extract with absolute ethanol
- Perform extraction for 16 hours (the extraction time of the rapid extractor can be reduced to about 1 hour)
- Allow the solution to cool and evaporate the ethanol by means of a rotary evaporator until a volume of about 80 ml is obtained

- Quantitatively transfer the solution by washing the round-bottomed flask with ethanol in a 100-mL volumetric flask and fill to volume with ethanol
- Filter the solution by means of a PTFE filter into a plastic container.

The obtained sample is subjected to ICP analysis (ICP-OES using Agilent model 720 apparatus with ICP standard solution of methyltriethoxysilane in absolute ethanol) to detect the amount of molecular silicon thus being able to exclude any part of silicon somehow bound to the polymer chains of the vulcanized elastomeric material.

Preferably, the vulcanizable elastomeric composition comprises an amount comprised between 40 and 80 phr, more preferably, comprised between 50 and 70 phr, of a carbon black reinforcing filler.

In this way, it is advantageously possible to adjust the stiffness characteristics of the vulcanized elastomeric material in which the textile reinforcing cords of the aforementioned at least one carcass layer are embedded, achieving optimal cornering stiffness characteristics of the tyre.

Preferably, the carbon black reinforcing filler is a carbon black having a surface area not lower than 20 $m^2$/g (as determined by STSA - Statistical Thickness Surface Area - according to ISO 18852:2005)

The elastomeric compositions described above and those of the other tyre components can be vulcanized according to known techniques, particularly with sulfur-based vulcanization systems, commonly used for elastomeric polymers.

To this end, in the elastomeric composition, after one or more steps of thermal-mechanical treatment, a sulfur-based vulcanizing agent is fed together with possible vulcanization accelerators, for example in the aforementioned fourth step of feeding to at least a second mixing apparatus the intermediate elastomeric material and the silane coupling agent.

In the final step of the process for producing the vulcanizable elastomeric composition, for example the aforementioned fifth step of mixing and dispersing the silane coupling agent into the intermediate elastomeric material, the sulfur-based vulcanizing agent and the possible vulcanization accelerators are incorporated in the intermediate elastomeric material, keeping the temperature generally below 140°C, so as to avoid any unwanted pre-crosslinking phenomenon.

The most advantageously used vulcanizing agent is sulfur, or molecules containing sulfur (sulfur donors), with accelerators and activators known to those skilled in the art.

Particularly effective activators are zinc-based compounds, and in particular ZnO, $ZnCO_3$, zinc salts of saturated or unsaturated fatty acids containing 8 to 18 carbon atoms, such as, for example, zinc stearate, which are preferably formed *in situ* in the elastomeric composition from ZnO and fatty acid, and also BiO, PbO, $Pb_3O_4$, $PbO_2$, or mixtures thereof.

Accelerators that are commonly used can be selected from: dithiocarbamates, guanidine, thiourea, thiazoles, sulfonamides, thiurams, amines, xanthates, or mixtures thereof.

The elastomeric compositions used may comprise other commonly selected additives based on the specific application for which each composition is intended.

For example, the following additives may be added to said elastomeric compositions: antioxidants, anti-aging agents, plasticizers, adhesives, antiozonants, one or more modifying resins, fibers (aramidic or of natural origin), or mixtures thereof.

Preferably, the modifying resin is a non-reactive resin, i.e. a non-cross-linkable polymer, preferably selected from the group comprising hydrocarbon resins, phenolic resins, natural resins, or mixtures thereof.

The hydrocarbon resin can be aliphatic, aromatic or combinations thereof, meaning that the base polymer of the resin can be constituted by aliphatic and/or aromatic monomers.

The hydrocarbon resin can be natural (for example vegetable) or synthetic or derived from petroleum.

Preferably, the hydrocarbon resin is selected from homo- and copolymers of butadiene, homo- or copolymers of cyclopentadiene (CPD), dicyclopentadiene (DCPD), homo or copolymers of terpene, homo- or copolymers of the C5 fraction and mixtures thereof, preferably copolymers of DCPD/vinyl aromatics, DCPD/terpenes, DCPD/C5 fraction, terpenes/vinyl aromatics, C5 fractions/vinyl aromatics, and combinations thereof.

Examples of vinyl aromatic monomers comprise styrene, alpha-methylstyrene, ortho-, meta-, para-methylstyrene, vinyl-toluene, para-tert-butylstyrene, methoxy-styrenes, chloro-styrenes, vinyl-mesitylene, divinyl-benzenes, vinyl-naphthalenes, vinyl aromatic monomers derived from a C8-C10 fraction, particularly from a C9 fraction.

Preferably, the hydrocarbon resin is selected from resins derived from coumarone-indene, styrene-indene, styrene-alkyl styrene, and aliphatic resins.

Specific examples of commercially available hydrocarbon resins include NOVARES® resins produced by RUTGERS CHEMICAL GmbH (such as for example Novares® TL90 and TT30 resins, UNILENE® A 100 resin produced by Braskem, Sylvares® SA 85 resin produced by Arizona Chemical, Kristalex® F 85 and Piccotac® 1100 resins produced by Eastman, Escorez® 1102 resin produced by ExxonMobil, and Quintone® A 100 resin produced by Zeon Chemicals.

The phenolic resin is selected from alkylphenol-formaldehyde-based resins, rosin-modified alkylphenol resins, alkylphenol-acetylene-based resins, modified alkylphenol resins, and terpene-phenol-based resins.

Specific examples of commercially available phenolic resins that can be used in the present invention are: OFF APM (produced by Sinolegend); SP-1068 (produced by SI GROUP Inc.) (octylphenol-formaldehyde resin); DUREZ® 32333 (produced by Sumitomo Bakelite) (terbutylphenol-formaldehyde resin); KORESIN® (produced by BASF Company) (p-t-butylphenol-acetylene resin); SYLVARES® TP 115 (produced by Arizona Chemicals) (terpene phenolic resin).

The natural resins can be terpene-based or rosin-based.

Terpene-based resins are preferably homo- or copolymers of alpha-pinene, beta-pinene, limonene, vinyl aromatic monomers (styrene) and/or aromatic monomers (phenol).

Examples of commercial terpene-based natural resins are: Piccolyte® F90 and Piccolyte® F105, produced by PINOVA; Dercolyte® A 115, Dercolyte® TS105 and Dercolyte® M 115, produced by DRT.

The term rosin commonly indicates a mixture of isomeric organic acids (rosin acids) characterized by a common structure, comprising three fused C6 rings, double bonds in different numbers and positions, and a single carboxylic group, where the main component is abietic acid ($C_{20}H_{30}O_2$) and its dihydroabietic ($C_{20}H_{32}O_2$) and dehydroabietic ($C_{20}H_{28}O_2$) derivatives.

Examples of rosin-based resins are commercialized by DRT with the trade name Hydrogral® G and Dertoline® P 105, and by Eastman with the trade name Staybelite®, in particular Staybelite® Ester 3-E.

In a possible preferred embodiment, the motorcycle tyre according to the present invention may further comprise at least one structural element selected from flipper and chafer.

In this case, such a structural element can comprise at least one layer comprising a plurality of reinforcing cords comprising one or more textile yarns comprising a plurality of textile filaments made of a material selected from rayon, PET, PEN and PEEK, and/or hybrid reinforcing cords comprising a plurality of textile filaments made of a combination of two or more of rayon, PET, PEN and PEEK, incorporated in the aforementioned vulcanized elastomeric material, described above.

Preferably, the carcass structure of the tyre is a radial carcass structure.

Preferably, the tyre is a tyre for rear motorcycle wheels and has a transversal curvature ratio of at least about 0.30 and preferably comprised between 0.30 and 0.35.

Brief description of the figures

Additional features and advantages of the invention will become more readily apparent from the following description of some preferred embodiments thereof, given below, by way of non-limiting examples, with reference to the attached drawings.

Such drawings are schematic and not to scale.

In the drawings:

- Fig. 1 shows an enlarged view of a cross-section of a tyre according to a preferred embodiment of the invention intended to be mounted on the rear wheel of a motorcycle;

- Fig. 2 shows some graphs of the cornering stiffness Ky measured at different vertical loads $F_z$ of a tyre according to a preferred embodiment of the invention and of a comparative tyre.

Detailed description of currently preferred embodiments

In the figures, a tyre for motorcycle wheels according to a preferred embodiment of the present invention is generally indicated at 1. The tyre 1 is a tyre preferably intended for use on a rear wheel of a motorcycle for a large-displacement supersport motorcycle, for example 600cc.

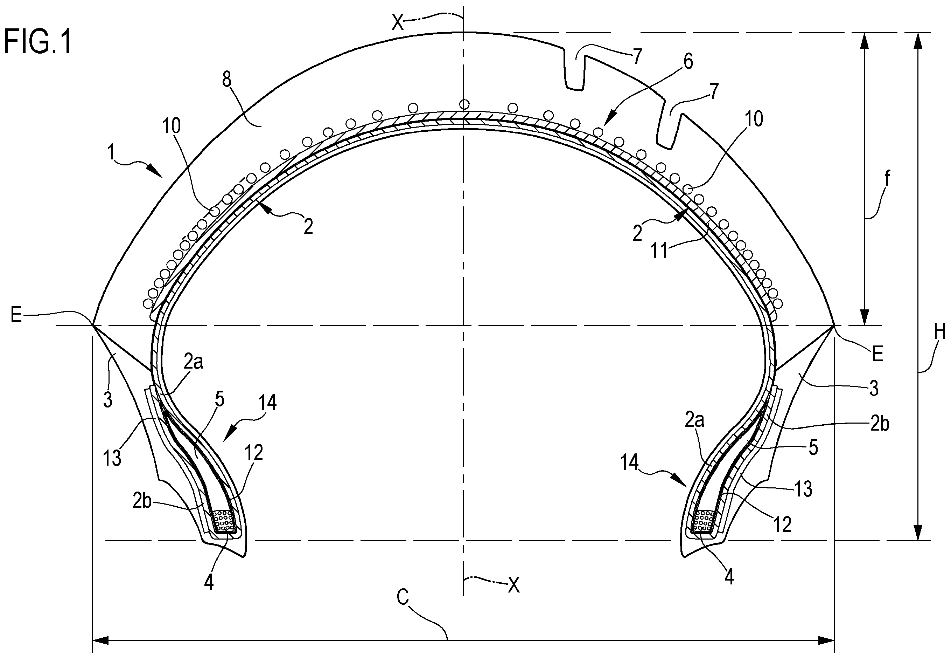

An equatorial plane X-X and an axis of rotation (not shown) are defined in the tyre 1. A circumferential direction and an axial direction, indicated in figure 1 with the axis r perpendicular to the equatorial plane X-X, are also defined.

The tyre 1 comprises a carcass structure 2 comprising at least one carcass layer or ply 2a, preferably a single carcass layer or ply 2a, made of an elastomeric material in which a plurality of textile reinforcing cords are embedded.

Preferably, the textile reinforcing cords are arranged substantially parallel to each other and oriented along a substantially axial direction. More preferably, each reinforcing cord belongs to a respective radial plane of the tyre 1. Therefore, the carcass structure 2 is a radial carcass structure.

The carcass layer 2a is engaged, by means of its opposite circumferential edges with at least one annular reinforcing structure 4.

In particular, the opposite lateral edges of the carcass layer 2a are turned around respective annular reinforcing structures 4 called bead cores.

A tapered elastomeric filler 5 is applied to the axially outer perimeter edge of the bead cores 4, occupying the space defined between the carcass layer 2a and the corresponding turned side edge 2b of the carcass layer 2a.

As is known, the area of the tyre 1 comprising the bead core 4 and the filler 5 forms the so-called bead structure 14, intended for anchoring the tyre 1 on a corresponding mounting rim, not illustrated.

Again with reference to the preferred embodiment shown in figure 1, the reinforcing elements included in the carcass layer 2a preferably comprise textile reinforcing cords, selected from those described above, for example and preferably made of Rayon.

Preferably, the Rayon textile cords have a linear density comprised between 2000 and 2500 dtex.

Preferably, the textile reinforcing cords have a thread count comprised between 97 and 110 cords/dm.

Preferably, the textile reinforcing cords are embedded in a vulcanized elastomeric material obtained from a vulcanizable elastomeric composition as described above.

In the following Table 1, merely for exemplary and non limiting purposes, an example is given of a preferred vulcanizable elastomeric composition that, once vulcanized, forms the vulcanized elastomeric material incorporating the textile reinforcing cords described above.

The amounts of the various components of an elastomeric composition are given in phr as defined above.

Table 1

| Ingredient | Amount (phr) |
|---|---|
| ESBR | 15-35 |
| NR | 65-85 |
| CB | 50-65 |
| Silica | 5-20 |
| Silane coupling agent | 2-4 |
| Phenolic resin | 0.5-2 |
| Methylene donor | 2-4 |
| Stearic acid | 1-2 |
| Zinc oxide | 5-8 |
| Antiozonant | 3-5 |
| Resorcin | 1-3 |
| Scorching inhibitor | 0.2-0.5 |
| Accelerator | 0.5-1.5 |
| Insoluble sulfur | 3-5 |

ESBR: styrene-butadiene emulsion polymerized copolymer SBR 1500 grade A (Sibur International) (phr given as dry polymer)
NR: natural rubber SIR 20 P 91 (Standard Indonesian Rubber SIR 20)
CB: Carbon Black N326 (Birla Carbon)
Silica: Perkasil® 408 (Grace)
Silane coupling agent: TESPT - Si 69 (Evonik)
Methylene donor: HMM 65% (Lanxess)
Stearic acid: Stearin N (Sogis)
Zinc oxide: Zinc oxide at 80% by weight (Rhenogran® ZnO-80 RheinChemie)
Antiozonant: 6PPD (N-(1,3-dimethylbutyl)-N'-phenyl-p-phenylenediamine) (Eastman)
Phenolic resin: Octylphenol Resin (Sumitomo Bakelite)
Resorcin: Rhenogran® Resorcin 80 (RheinChemie)
Scorching Inhibitor: Vulkalent G (RheinChemie)
Accelerator: N-tert-butyl-2-benzothiazylsulfenamide TBBS 80 (Lanxess))
Insoluble sulfur: Rhenocure® IS 90 P (RheinChemie)

In an embodiment that is not illustrated, the carcass structure 2 may have its opposite side edges associated, without turning, to special annular reinforcing structures provided with two annular inserts. An elastomeric material filler can be arranged at an axially outer position with respect to the first annular insert. The second annular insert, on the other hand, is arranged at an axially outer position with respect to the end of the carcass layer.

Finally, at an axially outer position with respect to said second annular insert, and not necessarily in contact therewith, an additional filler may be provided that finishes the construction of the annular reinforcing structure.

The tyre 1 comprises a pair of sidewalls 3 laterally applied on opposite sides to the carcass structure 2.

In a possible preferred embodiment, the stiffness of the sidewall 3 of the tyre 1 can be improved by equipping the bead structure 14 with a reinforcing layer 12 generally known as a "flipper" or additional ribbon-like insert.

The flipper 12 is a reinforcing layer that is wound around the respective bead core 4 and bead filler 5 so as to at least partially surround the same, said reinforcing layer being arranged between the at least one carcass layer 2a and the bead structure 14.

Preferably, the flipper 12 is in contact with the aforementioned at least one carcass layer 2a and the bead structure 14.

In this preferred embodiment, the flipper 12 comprises a plurality of textile reinforcing cords embedded within a layer of vulcanized elastomeric material as described in the present document.

In a possible preferred embodiment, the bead structure 14 of the tyre may comprise a further protective layer 13, generally known by the term "chafer" or protective strip, and which has the function of increasing stiffness and integrity of the bead structure 14.

Preferably, the protective layer 13 or "chafer" comprises a plurality of textile reinforcing cords embedded within a layer of vulcanized elastomeric material as described in the present document.

A belt structure 6 is circumferentially applied on the carcass structure 2 at a radially outer position.

Preferably, the belt structure 6 of the tyre 1 is of the zero-degree type.

The belt structure 6 is preferably formed by winding on the crown portion of the carcass structure 2 one or more layers comprising a single reinforcing cord 10, or a ribbon-like reinforced element of rubberized fabric comprising a plurality of reinforcing cords 10 arranged side by side along the axial direction, to form a plurality of coils substantially oriented according to the circumferential direction of the tyre 1 (preferably with an angle comprised between 0° and 5° with respect to the equatorial plane X-X).

When a reinforced ribbon-like element is used, this element may comprise up to seven reinforcing cords 10, more preferably two or three or four reinforcing cords 10.

Preferably, the winding defined by the coils axially extends over the entire crown portion of the carcass structure 2, with a winding pitch that can be constant or variable along the axial direction.

In a further preferred embodiment, not illustrated, the belt structure 6 may be formed by at least two radially overlapping layers, each constituted by an elastomeric material reinforced with cords arranged parallel to each other. The layers are arranged in such a way that the cords of the first belt layer 6 are oriented obliquely with respect to the equatorial plane X-X of the tyre 1, whereas the cords of the second layer also have oblique orientation, but symmetrically crossed with respect to the cords of the first layer (the so-called "crossed belt").

Generally, in both cases, the reinforcing cords of the belt structure 6 can be textile or metal cords.

A tread band 8, by means of which the tyre 1 makes contact with the ground, is provided at a radially outer position with respect to the belt structure 6.

Longitudinal and/or transversal grooves, indicated at 7 and not described in greater detail, arranged to define a desired tread pattern, are typically formed on the tread band 8 as a result of a molding operation carried out concurrently with the vulcanization of the tyre 1.

The tyre 1 has a section height H measured, at the equatorial plane X-X, between the top of the tread band 8 and the fitting diameter, identified by a reference line r, passing through the beads of the tyre 1.

The tyre 1 further has a cross section maximum width C, or "cord", defined by the distance between the axially opposite ends E of the profile of the tread band 8, and a curvature ratio, defined as the ratio between the distance f of the top of the tread band 8 from the line passing through the ends E of the tread band 8 itself, measured at the equatorial plane of the tyre 1 and the aforesaid maximum width C. The axially opposite ends E of the tread band 8 may be formed by a corner.

In a preferred embodiment, the motorcycle tyre 1 of the invention is intended to be mounted on the rear wheel having cord dimensions substantially comprised between 160 and 210 mm.

Preferably, the distance f between the radially outer point of the tread band 8 and the line passing through the axially opposite ends E of the tread band 8 itself of tyre 1 is substantially comprised between 50 and 70 mm.

Preferably, for a tyre 1 intended to be mounted on the rear wheel of a motorcycle, the transversal curvature ratio f/C is substantially equal to or greater than 0.30, even more preferably comprised between 0.30 and 0.35.

Preferably, the total height/cord H/C ratio is substantially comprised between 0.5 and 0.65.

In preferred embodiments, the tyres 1 allow better performance when they have sidewalls 3 of appreciable height, for example, with values of the sidewall height (H-f)/H ratio equal to or greater than 0.35, more preferably equal to or greater than 0.4 when the tyre 1 is intended to be mounted on the rear wheel of a motorcycle.

Preferably, the tyre 1 has a ratio between shoulder radius and maximum cross-sectional width equal to or greater than 0.60.

The carcass structure 2 is typically coated on its inner walls with a sealing layer, or so-called "liner", not better illustrated in the figures, essentially consisting of a layer of air-impermeable elastomeric material, adapted to ensure that the tyre 1 is airtight when inflated.

Preferably, the tyre 1 may comprise a layer of elastomeric material 11 arranged between the carcass structure 2 and the belt structure 6, the layer 11 preferably extending over an area substantially corresponding to the development surface of the belt structure 6.

According to a preferred embodiment of the invention, the tread band 8 can be of the so-called "cap-and-base" type, i.e. made with at least two different elastomeric materials.

The compounds of the tread band 8, for the possible different portions thereof, as well as for the other semi-finished products forming the tyre 1 comprise at least one diene elastomeric polymer.

Advantageously, such compounds comprise at least one alpha-olefin.

According to an embodiment, said at least one elastomeric diene polymer can be selected, for example, from elastomeric diene polymers commonly used in sulfur-crosslinkable (vulcanizable) elastomeric compositions that are particularly suitable for tyre production, or from elastomeric polymers or copolymers with an unsaturated chain having a glass transition temperature (Tg) normally below 20°C, preferably in the range of 0°C to - 110°C. These polymers or copolymers may be of natural origin or may be obtained by solution polymerization, emulsion polymerization, or gas-phase polymerization of one or more conjugated diolefins, optionally mixed with at least one comonomer selected from monovinylarenes and/or polar comonomers.

Polybutadiene (BR) and/or styrene-butadiene (SBR) polymers, for example SSBR (solution polymerised styrene butadiene elastomer) alone or in admixture, may preferably be used for the tread elastomeric material.

Alternatively, mixtures comprising polyisoprene (natural or synthetic) and a styrene-butadiene polymer (SBR) can be used.

Preferably, the styrene-butadiene polymer (SBR) may be present in the elastomeric materials of the tread of the present invention in amounts ranging from about 1 to 100 phr, more preferably from 5 to 95 phr.

Advantageously, the polybutadiene (BR) may be absent or included in the tread compounds of the present invention and in particular in the elastomeric material of the tread in amounts from about 1 phr to 100 phr, preferably from about 1 phr to 80 phr, more preferably from about 5 to 50 phr.

Preferably, the styrene-butadiene polymer can be obtained in solution or emulsion, and comprises styrene generally in amounts ranging from about 10 to 40%, preferably from about 15 to 30%.

Preferably, the styrene-butadiene polymer can have low molecular weight, having an average molecular weight Mn of lower than 50000 g/mol, preferably between 1000 and 50000 g/mol.

The elastomeric material of the tread band 8 or of the different portions thereof, comprises at least one reinforcing filler present in an amount generally comprised between 1 phr and 130 phr.

Such a reinforcing filler can be selected from carbon black and so-called white fillers: silica, alumina, silicates, hydrotalcite, calcium carbonate, kaolin, titanium dioxide and mixtures thereof.

Preferably, the aforementioned white filler is silica.

Preferably, the silica that can be used in the present invention can generally be a pyrogenic silica or, preferably, a precipitated silica, with a BET surface area (measured according to ISO Standard 5794/1) comprised between 50 $m^2$/g and 500 $m^2$/g, preferably between 70 $m^2$/g and 200 $m^2$/g.

The elastomeric compositions described above and those of the other components of the tyre 1 can be vulcanized according to known techniques, particularly with sulfur-based vulcanization systems, commonly used for elastomeric polymers. To this end, in the elastomeric composition, after one or more steps of thermal-mechanical treatment, a sulfur-based vulcanizing agent is incorporated together with vulcanization accelerators. In the final step of the treatment, the temperature is generally kept below 140°C, so as to avoid any unwanted pre-crosslinking phenomenon.

The most advantageously used vulcanizing agent is sulfur, or molecules containing sulfur (sulfur donors), with accelerators and activators known to those skilled in the art, for example the accelerators and activators described above.

The elastomeric compositions used may comprise other commonly selected additives based on the specific application for which each composition is intended, for example additives described above.

The invention is now described by means of an Example to be considered for non-limiting and illustrative purposes thereof.

EXAMPLE 1

The Applicant, in view of experimentally verifying the grip requirements to the ground, fatigue resistance of the reinforcing cords of the carcass structure, and the consistency of performance over time of a tyre, performed a series of comparative tests between:

(i) a rear tyre according to the invention provided with a so-called single-ply radial carcass structure made with Rayon 2442 textile reinforcing cords as defined above (single-yarn cords with two ends) embedded in a vulcanized elastomeric material obtained by vulcanizing a vulcanizable elastomeric composition as described hereinafter, and

(ii) a comparative rear tyre provided with a single-ply radial carcass structure of normal production made with hybrid aramid/PET textile reinforcing cords embedded in a vulcanized elastomeric material not according to the present invention and obtained by vulcanizing a vulcanizable elastomeric composition as described hereinafter.

The aforementioned test tyres had the following sizes: 200/65R17.

The two tyres had a structure like the structure described above with reference to the tyre 1 shown in Fig. 1, except for the absence of the flipper 12 and the chafer 13, and had the same structure and composition as to the other structural components other than the carcass structure 2 that was made in the two cases as described earlier.

More specifically, the features of the reinforcing cords and of the vulcanizable elastomeric composition used to make the vulcanized elastomeric material incorporating the cords of the carcass ply of the aforementioned tyres are shown in the following Tables 2 and 3.

Table 2

|  | Single Yarn Rayon cords |  |  | Hybrid aramid/PET Cords |
|---|---|---|---|---|
| Linear density | 2440 | Linear density | | 2200/1670 |
| No. of ends | 2 | No. of yarns | | 2 |
| No. of single end twists | 25 | No. of single yarn twists | | 33 |
| No. of two-end yarn twists | 25 | No. of cord twists of two yarns | | 33 |
| Thread count (cords/dm) | 97 | Thread count (cords/dm) | | 110 |
| Tensile strength (N) | 230 | Tensile strength (N) | | 360 |
| Toughness (cN/dtex) | 4.71 | Toughness (cN/dtex) | | 9.30 |

As can be seen from Table 2 above, the reinforcing cords used in the carcass ply of the tyre according to the invention have mechanical characteristics of lower stiffness and lower tensile strength with respect to those of the comparative reinforcing cords.

Table 3

| Ingredient | Vulcanizable elastomeric composition according to the invention (phr) | Comparative vulcanizable elastomeric composition (phr) |
|---|---|---|
| ESBR | 30 | - |
| NR | 70 | 70 |
| IR | - | 30 |
| CB[1] | 54 | 56.50 |
| CB[2] | 3 | - |
| Silica | 10 | - |
| Silane coupling agent | 3 | - |
| Phenolic resin | 1.00 | 2.50 |
| Methylene donor | 3 | 3.00 |
| Stearic acid | 1.50 | 1.50 |
| Zinc oxide | 5.5 | 5.5 |
| Antiozonant | 2.5 | 1.00 |
| Resorcin | 1.60 | 1.60 |
| Scorching inhibitor | 0.30 | 0.40 |
| Accelerator[1] | 0.9 | - |
| Accelerator[2] | - | 1.30 |

(continued)

| Ingredient | Vulcanizable elastomeric composition according to the invention (phr) | Comparative vulcanizable elastomeric composition (phr) |
|---|---|---|
| Insoluble sulfur | 3.38 | 4.64 |

ESBR: emulsion polymerized styrene-butadiene copolymer SBR 1500 grade A (Sibur International) (phr given as dry polymer)
NR: natural rubber SIR 20 P 91 (Standard Indonesian Rubber SIR 20)
IR: synthetic polyisoprene rubber SKI 3 GRUPPE 2 ROT (SKI-3 Nizhnekamskneftekhim)
CB[1]: Carbon Black N326 (Birla Carbon)
CB[2]: Carbon Black N330 (Cabot)
Silica: Perkasil® 408 (Grace)
Silane coupling agent: TESPT - Si 69 (Evonik)
Methylene donor: HMM 65% (Lanxess)
Stearic acid: Stearin N (Sogis)
Zinc oxide: Zinc oxide at 80% by weight (Rhenogran® ZnO-80 RheinChemie)
Antiozonant: 6PPD (N-(1,3-dimethylbutyl)-N'-phenyl-p-phenylenediamine) (Eastman)
Phenolic resin: Octyphenolic Resin (Sumitomo Bakelite)
Resorcin: Rhenogran® Resorcin 80 (RheinChemie)
Scorching inhibitor: Vulkalent G (RheinChemie)
Accelerator[1]: N-tert-butyl-2-benzothiazylsulfenamide TBBS 80 (Lanxess)
Accelerator[2]: N-cyclohexyl-2-benzothiazyl-sulfenamide CBS - Vulkacit® CZ/C (Lanxess)
Insoluble sulfur: Rhenocure® IS 90 P (RheinChemie)

Properties of the vulcanized elastomeric compositions

The following Table 4 shows the results of the static and dynamic mechanical analyses performed on samples of vulcanized elastomeric materials obtained by vulcanizing the vulcanizable elastomeric compositions indicated in the previous Table 3 and used in the carcass plies 2 of the tyre according to the invention and of the comparative tyre.

The vulcanized elastomeric materials were obtained by vulcanizing the vulcanizable elastomeric compositions indicated in the previous Table 3 at 170°C for 15'.

The static mechanical properties were evaluated according to the methods of analysis described in standard UNI 6065:2001.

The dynamic mechanical properties (E' and tandelta) were measured using the methodology outlined above.

Table 4

| | Vulcanized elastomeric material according to the invention | Comparative vulcanized elastomeric material |
|---|---|---|
| Static properties | | |
| Ca 0.5 (MPa) | 1.76 | 1.48 |
| Ca1 (MPa) | 3.15 | 2.74 |
| CR (MPa) | 16.59 | 13.06 |
| AR (MPa) | 378.77 | 309.43 |
| Energy (J/cm$^3$) | 27.80 | 16.20 |
| Dynamic properties | | |
| E' 100°C (MPa) | 7.04 | 6.67 |
| Tandelta | 0.134 | 0.098 |
| E' 23°C (MPa) | 9.07 | 7.72 |
| Tandelta | 0.207 | 0.154 |
| E' 70°C (MPa) | 7.37 | 6.92 |

(continued)

| Dynamic properties | | |
|---|---|---|
| Tandelta | 0.155 | 0.112 |

| CA 0.5: load at an elongation of 50%<br>CA1: load at an elongation of 100%<br>CR: Tensile strength<br>AR: elongation at break |
|---|

As can be seen from Table 4 above, the vulcanized elastomeric material used in the carcass ply of the tyre according to the invention has better static and dynamic mechanical properties than those of the comparative vulcanized elastomeric material.

Indoor tyre testing

Evaluation of cornering stiffness

The two types of test tyre, according to the invention or comparative, were subjected to a first indoor test having the purpose of measuring their cornering stiffness by means of the test illustrated hereinafter.

As outlined above, the value of the cornering stiffness is influenced by the stiffness of the tyre structure and has been considered here to evaluate the performance of the tyre in terms of readiness, drivability, and stability, which can serve to establish the aforementioned requirements of grip to the ground and readiness, as well as to evaluate their decay over time.

In particular, the cornering stiffness was measured as follows.

Each tyre was tested using a Flat Trac® Tire Force & Moment Measurements Systems model testing machine (MTS Systems Corporation, Eden Prairie, MN, USA) capable of measuring forces and moments generated by slip and camber angles.

In the present case, each tyre to be tested was mounted on a turret of the aforementioned machine and was set to roll on an abrasive surface arranged on a moving belt and placed in longitudinal sliding capable of reproducing, by means of a relative movement with respect to the turret on which the tyre is mounted, a friction coefficient similar to or greater than that of asphalt.

During the course of the test, each tyre was tilted increasing the slip angle (a manoeuvre also called "sweeping" in the jargon) from an initial slip angle equal to 0° towards increasing slip angles determining the cornering stiffness Ky (Newtons/degrees of inclination). As outlined above, such a parameter is related to the lateral force that develops as the slip angle of the tyre increases.

For each tyre to be tested and for each of the manoeuvres indicated above, in the first part of each "sweep" the tyre generates a lateral force Fy that increases roughly linearly with the slip angle. In this step, the cornering stiffness, or Ky, is measured, which indicates how many Newtons (N) of lateral force are developed for each degree of slip which has been set. In this way, a Ky value was obtained for each of the loads Fz which the tyre was subjected to.

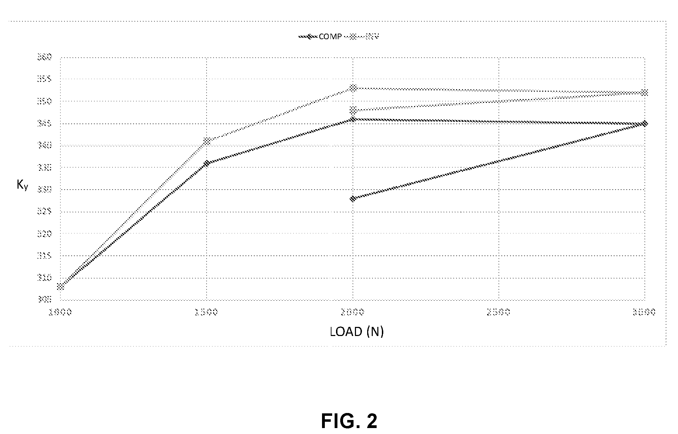

Fig. 2 illustrates the obtained values of the cornering stiffness (Ky in N/° - shown on the y-axis) as a function of the vertical load applied to the tyre (in N - shown on the x-axis).

As can be seen from the graphs shown in Fig. 2, the cornering stiffness Ky measured at different vertical loads $F_z$ unexpectedly has, in the case of the tyre according to the invention, significantly higher values than those which could be achieved with the comparative tyre having a single-ply radial carcass structure reinforced with hybrid aramid/PET fibers embedded in a conventional vulcanized elastomeric material.

The testing methodology at different vertical loads consists of a series of "sweeps" obtained by increasing the slip angle, such as the sweep described above, which are carried out for each of the following vertical loads:

- 1000 N

- 1500 N

- 2000 N (reference load)

- 3000 N

Only one sweep is performed for each vertical load, except for the reference vertical load (2000 N), for which the manoeuvre was repeated twice at two different times during the test.

It should be considered that at each "sweep" that is performed, the tyre progressively increases its temperature, and therefore, the second time the manoeuvre is performed at the reference load the only difference will be a higher temperature inside the tyre and its components.

This difference allows to make a comparison of the loss of cornering stiffness Ky as the temperature increases.

It should be noted here that in the second pass at the reference vertical load of 2000 N, thus when the tyre is subjected for the second time to the same vertical load condition $F_z$ but at a higher temperature being the tyre at the end of the slip manoeuvre, the tyre according to the invention has values of cornering stiffness Ky not only significantly higher in absolute terms than those of the comparative tyre, but also a reduction in the cornering stiffness Ky, resulting from the inevitable thermal-mechanical degradation undergone by the tyre and related to maintaining its performance over time, which is significantly smaller.

These results are totally surprising in light of the fact that the single-ply radial carcass structure of the tyre according to the invention uses reinforcing cords made of low-modulus textile yarns (Rayon) deemed in the art to be incapable to counteract the tendency of the carcass to deform when subjected to the thrusts generated by the tyre contact with asphalt, especially during a race or otherwise during an intensive use.

As a matter of fact, in contrast, it was found that the synergistic combination of these reinforcing cords with a vulcanized elastomeric material having suitable characteristics of dynamic elastic modulus E' measured at 70°C and 100Hz comprised between 5 and 9 MPa and hysteresis (tandelta) measured at 70°C and 100Hz comprised between 0.130 and 0.170, which occurs in the carcass structure according to the invention, allows to simultaneously achieve:

(i) a high stiffness and thus readiness of the tyre,

(ii) a large and stable footprint area and thus better motorcycle drivability as perceived by the rider,

(iii) improved consistency of tyre performance over time even when the tyre is highly stressed from a thermal-mechanical point of view.

Outdoor tyre testing

Racing performance evaluation

The following Table 5 summarizes the scores given by a test driver in dry-surface circuit tests for the various types of performance required of the tyre tested.

The test was carried out with a motorcycle of the supersport class in Superbike configuration model Yamaha R1 1000 cc with asphalt temperature of 28°C.

The inflation pressures used for both rear tyres, both the comparative tyre and the tyre according to the invention, were 1.6 bar.

In the present case, scores were assigned to the comparative tyre according to a scale of 1 to 5 (where on the scale a score of 1 indicates very unsatisfactory performance and a score of 5 indicates excellent performance), whereas for the tyre according to the invention the improvement with respect to the comparative tyre is indicated.

Table 5

| Tyres | Comparative tyre | Tyre according to the invention |
|---|---|---|
| Racing performance | | |
| Hot performance | 4.00 | +0.50 |
| Grip | 4.00 | +0.25 |
| Support and stability in acceleration | 3.50 | +1.25 |
| Consistency of performance over distance | 3.50 | +1.50 |

Various modifications can be made to the embodiments described in detail, still remaining within the scope of protection of the invention, defined by the following claims.

**Claims**

1. Tyre (1) for motorcycles, comprising:

   a carcass structure (2);
   optionally, a belt structure (6) applied at a radially outer position with respect to the carcass structure (2);
   a tread band (8) applied at a radially outer position with respect to the carcass structure (2) and, if present, with respect to the belt structure (6);
   wherein the carcass structure (2) comprises at least one carcass layer (2a);
   wherein said at least one carcass layer (2a) comprises a plurality of reinforcing cords comprising one or more textile yarns comprising a plurality of textile filaments made of a material selected from rayon, PET, PEN and PEEK, and/or hybrid reinforcing cords comprising a plurality of textile filaments made of a combination of two or more of rayon, PET, PEN and PEEK, incorporated in a vulcanized elastomeric material,
   **characterized in that** the vulcanized elastomeric material has a dynamic elastic modulus E' measured at 70°C and 100Hz comprised between 5.0 and 9.0 MPa, preferably between 5.5 and 7.5 MPa, and a tandelta measured at 70°C and 100Hz comprised between 0.130 and 0.170, preferably between 0.140 and 0.165;
   and **in that** the vulcanized elastomeric material comprises a white silica-based reinforcing filler and a residual unreacted amount of a silane coupling agent of the white silica-based reinforcing filler, expressed as an amount of silicon measured by ICP-OES, greater than or equal to 70 ppm, preferably comprised between 80 and 200 ppm, more preferably between 90 and 190 ppm.

2. Motorcycle tyre (1) according to claim 1, wherein said textile reinforcing cords have a linear density greater than, or equal to, 300 dtex, more preferably greater than, or equal to, 400 dtex, even more preferably greater than, or equal to, 500 dtex and lower than, or equal to, 3500 dtex, more preferably lower than, or equal to, 2500 dtex, even more preferably lower than, or equal to, 2300 dtex.

3. Motorcycle tyre (1) according to any one of the preceding claims, wherein said textile reinforcing cords have a thread count in the carcass layer (2a) greater than, or equal to, 97 cords/dm and lower than, or equal to, 110 cords/dm.

4. Motorcycle tyre (1) according to any one of the preceding claims, wherein said vulcanized elastomeric material is obtained by vulcanizing a vulcanizable elastomeric composition comprising:

   - 100 phr of at least one diene elastomeric polymer comprising an amount comprised between 15 and 40 phr of at least one styrene-butadiene rubber selected from: solution-polymerized styrene-butadiene rubber (S-SBR), emulsion-polymerized styrene-butadiene rubber (E-SBR), carboxylated styrene-butadiene rubber (X-SBR), or mixtures thereof;
   - an amount comprised between 2 and 20 phr of said white silica-based reinforcing filler;
   - an amount comprised between 1 and 4 phr of said silane coupling agent of said white silica-based reinforcing filler.

5. Motorcycle tyre (1) according to claim 4, wherein said at least one diene elastomeric polymer comprises an amount comprised between 20 and 35 phr of said at least one styrene-butadiene rubber.

6. Motorcycle tyre (1) according to any one of claims 4 or 5, wherein said styrene-butadiene rubber is an emulsion-polymerized styrene-butadiene rubber (E-SBR).

7. Motorcycle tyre (1) according to any one of claims 4-6, wherein said vulcanizable elastomeric composition comprises an amount comprised between 10 and 85 phr, more preferably, comprised between 40 and 75 phr, of natural rubber (NR).

8. Motorcycle tyre (1) according to any one of claims 4-7, wherein said vulcanizable elastomeric composition comprises an amount comprised between 5 and 15 phr of said white silica-based reinforcing filler.

9. Motorcycle tyre (1) according to any one of the preceding claims, wherein said white silica-based reinforcing filler is selected from silica, silicates, and mixtures thereof.

10. Motorcycle tyre (1) according to any one of claims 4-9, wherein said vulcanizable elastomeric composition comprises an amount comprised between 2 and 3 phr of said silane coupling agent of said white silica-based reinforcing filler.

**11.** Motorcycle tyre (1) according to any one of the preceding claims, wherein said vulcanizable elastomeric composition comprises an amount comprised between 40 and 80 phr, more preferably, comprised between 50 and 70 phr, of a carbon black reinforcing filler.

**12.** Motorcycle tyre (1) according to claim 1 or 2, further comprising at least one structural element selected from flipper (12) and chafer (13) and wherein said structural element comprises at least one layer comprising a plurality of reinforcing cords comprising one or more textile yarns comprising a plurality of textile filaments made of a material selected from rayon, PET, PEN and PEEK, and/or hybrid reinforcing cords comprising a plurality of textile filaments made of a combination of two or more of rayon, PET, PEN and PEEK, incorporated in said vulcanized elastomeric material.

**13.** Motorcycle tyre (1) according to any one of the preceding claims, wherein the tyre has a transversal curvature ratio of at least about 0.30 and preferably comprised between 0.30 and 0.35.

**Patentansprüche**

**1.** Reifen (1) für Motorräder, umfassend:

eine Karkassenstruktur (2);
optional, eine Gürtelstruktur (6), die an einer radial äußeren Position in Bezug auf die Karkassenstruktur (2) angebracht ist;
ein Laufflächenband (8), das an einer radial äußeren Position in Bezug auf die Karkassenstruktur (2) und, falls vorhanden, in Bezug auf die Gürtelstruktur (6) angebracht ist;
wobei die Karkassenstruktur (2) mindestens eine Karkassenschicht (2a) umfasst;
wobei die mindestens eine Karkassenschicht (2a) eine Vielzahl von Verstärkungscorden umfasst, umfassend ein oder mehrere Textilgarne, umfassend eine Vielzahl von Textilfasern, die aus einem Material ausgewählt aus Viskose, PET, PEN und PEEK hergestellt sind, und/oder Hybridverstärkungscorde, umfassend eine Vielzahl von Textilfasern, die aus einer Kombination von zwei oder mehr von Viskose, PET, PEN und PEEK hergestellt sind, eingearbeitet in ein vulkanisiertes elastomeres Material,
**dadurch gekennzeichnet, dass** das vulkanisierte elastomere Material einen dynamischen Elastizitätsmodul E', der bei 70 °C und 100 Hz gemessen zwischen 5,0 und 9,0 MPa, vorzugsweise zwischen 5,5 und 7,5 MPa liegt, und einen Verlustfaktor aufweist, der bei 70 °C und 100 Hz gemessen zwischen 0,130 und 0,170, vorzugsweise zwischen 0,140 und 0,165 liegt;
und **dadurch, dass** das vulkanisierte elastomere Material einen weißen siliciumdioxidbasierten Verstärkungsfüllstoff und eine restliche nicht umgesetzte Menge eines Silankopplungsmittels des weißen siliciumdioxidbasierten Verstärkungsfüllstoffs umfasst, ausgedrückt als eine durch ICP-OES gemessene Siliciummenge, die größer als oder gleich 70 ppm ist, vorzugsweise zwischen 80 und 200 ppm, mehr bevorzugt zwischen 90 und 190 ppm liegt.

**2.** Motorradreifen (1) nach Anspruch 1, wobei die textilen Verstärkungscorde eine lineare Dichte größer als oder gleich 300 dtex, mehr bevorzugt größer als oder gleich 400 dtex, noch mehr bevorzugt größer als oder gleich 500 dtex, und kleiner als oder gleich 3500 dtex, mehr bevorzugt kleiner als oder gleich 2500 dtex, noch mehr bevorzugt kleiner als oder gleich 2300 dtex aufweisen.

**3.** Motorradreifen (1) nach einem der vorstehenden Ansprüche, wobei die textilen Verstärkungscorde eine Fadenzahl in der Karkassenschicht (2a) von größer als oder gleich 97 Corde/dm und kleiner als oder gleich 110 Corde/dm aufweisen.

**4.** Motorradreifen (1) nach einem der vorstehenden Ansprüche, wobei das vulkanisierte elastomere Material durch Vulkanisieren einer vulkanisierbaren elastomeren Zusammensetzung erhalten wird, umfassend:

- 100 phr von mindestens einem Dien-Elastomerpolymer, umfassend eine Menge, die zwischen 15 und 40 phr liegt, von mindestens einem Styrol-Butadien-Kautschuk ausgewählt aus: lösungspolymerisiertem Styrol-Butadien-Kautschuk (S-SBR), emulsionspolymerisiertem Styrol-Butadien-Kautschuk (E-SBR), carboxyliertem Styrol-Butadien-Kautschuk (X-SBR) oder Mischungen davon;
- eine Menge, die zwischen 2 und 20 phr liegt, des weißen siliciumdioxidbasierten Verstärkungsfüllstoffs;
- eine Menge, die zwischen 1 und 4 phr liegt, des Silankopplungsmittels des weißen siliciumdioxidbasierten Verstärkungsfüllstoffs.

5. Motorradreifen (1) nach Anspruch 4, wobei das mindestens eine Dien-Elastomerpolymer eine Menge, die zwischen 20 und 35 phr liegt, des mindestens einen Styrol-Butadien-Kautschuks umfasst.

6. Motorradreifen (1) nach einem der Ansprüche 4 oder 5, wobei der Styrol-Butadien-Kautschuk ein emulsionspolymerisierter Styrol-Butadien-Kautschuk (E-SBR) ist.

7. Motorradreifen (1) nach einem der Ansprüche 4 bis 6, wobei die vulkanisierbare elastomere Zusammensetzung eine Menge, die zwischen 10 und 85 phr, mehr bevorzugt zwischen 40 und 75 phr liegt, an Naturkautschuk (NR) umfasst.

8. Motorradreifen (1) nach einem der Ansprüche 4 bis 7, wobei die vulkanisierbare elastomere Zusammensetzung eine Menge, die zwischen 5 und 15 phr liegt, des weißen siliciumdioxidbasierten Verstärkungsfüllstoffs umfasst.

9. Motorradreifen (1) nach einem der vorstehenden Ansprüche, wobei der weiße siliciumdioxidbasierte Verstärkungsfüllstoff aus Siliciumdioxid, Silicaten und Mischungen davon ausgewählt ist.

10. Motorradreifen (1) nach einem der Ansprüche 4 bis 9, wobei die vulkanisierbare elastomere Zusammensetzung eine Menge, die zwischen 2 und 3 phr liegt, des Silankopplungsmittels des weißen siliciumdioxidbasierten Verstärkungsfüllstoffs umfasst.

11. Motorradreifen (1) nach einem der vorstehenden Ansprüche, wobei die vulkanisierbare elastomere Zusammensetzung eine Menge, die zwischen 40 und 80 phr liegt, mehr bevorzugt zwischen 50 und 70 phr liegt, eines Rußverstärkungsfüllstoffs umfasst.

12. Motorradreifen (1) nach Anspruch 1 oder 2, ferner umfassend mindestens ein strukturelles Element ausgewählt aus Wulstfahne (12) und Wulstband (13), und wobei das strukturelle Element mindestens eine Schicht umfasst, umfassend eine Vielzahl von Verstärkungscorden, umfassend ein oder mehrere Textilgarne, umfassend eine Vielzahl von Textilfasern, die aus einem Material ausgewählt aus Viskose, PET, PEN und PEEK hergestellt sind, und/oder HybridVerstärkungscorde, umfassend eine Vielzahl von Textilfasern, die aus einer Kombination von zwei oder mehr von Viskose, PET, PEN und PEEK hergestellt sind, eingearbeitet in das vulkanisierte elastomere Material.

13. Motorradreifen (1) nach einem der vorstehenden Ansprüche, wobei der Reifen ein transversales Krümmungsverhältnis von mindestens etwa 0,30 und vorzugsweise zwischen 0,30 und 0,35 liegend aufweist.

**Revendications**

1. Pneu (1) pour motocycles, comprenant :

une structure de carcasse (2) ;
éventuellement, une structure de ceinture (6) appliquée au niveau d'une position radialement externe par rapport à la structure de carcasse (2) ;
une bande de roulement (8) appliquée au niveau d'une position radialement externe par rapport à la structure de carcasse (2) et, si elle est présente, par rapport à la structure de ceinture (6) ;
dans lequel la structure de carcasse (2) comprend au moins une couche de carcasse (2a) ;
dans lequel ladite au moins une couche de carcasse (2a) comprend une pluralité de câblés de renforcement comprenant un ou plusieurs fils textiles comprenant une pluralité de filaments textiles faits d'un matériau choisi parmi la rayonne, le PET, le PEN et le PEEK, et/ou des câblés de renforcement hybrides comprenant une pluralité de filaments textiles faits d'une combinaison de deux ou plus parmi la rayonne, le PET, le PEN et le PEEK, incorporés dans un matériau élastomère vulcanisé,
**caractérisé en ce que** le matériau élastomère vulcanisé a un module d'élasticité dynamique E' mesuré à 70 °C et 100 Hz compris entre 5,0 et 9,0 MPa, de préférence entre 5,5 et 7,5 MPa, et une tan delta mesurée à 70 °C et 100 Hz comprise entre 0,130 et 0,170, de préférence entre 0,140 et 0,165 ;
et **en ce que** le matériau élastomère vulcanisé comprend une charge de renforcement à base de silice blanche et une quantité résiduelle n'ayant pas réagi d'un agent de couplage silane de la charge de renforcement à base de silice blanche, exprimée en tant que quantité de silicium mesurée par ICP-OES, supérieure ou égale à 70 ppm, de préférence comprise entre 80 et 200 ppm, plus préférablement entre 90 et 190 ppm.

**2.** Pneu pour motocycle (1) selon la revendication 1, dans lequel lesdits câblés de renforcement textiles ont une masse linéique supérieure ou égale à 300 dtex, plus préférablement supérieure ou égale à 400 dtex, encore plus préférablement supérieure ou égale à 500 dtex et inférieure ou égale à 3500 dtex, plus préférablement inférieure ou égale à 2500 dtex, encore plus préférablement inférieure ou égale à 2300 dtex.

**3.** Pneu pour motocycle (1) selon l'une quelconque des revendications précédentes, dans lequel lesdits câblés de renforcement textiles ont une contexture dans la couche de carcasse (2a) supérieure ou égale à 97 câblés/dm et inférieure ou égale à 110 câblés/dm.

**4.** Pneu pour motocycle (1) selon l'une quelconque des revendications précédentes, dans lequel ledit matériau élastomère vulcanisé est obtenu par vulcanisation d'une composition élastomère vulcanisable comprenant :

- 100 pce d'au moins un polymère élastomère diénique comprenant une quantité comprise entre 15 et 40 pce d'au moins un caoutchouc styrène-butadiène choisi parmi : caoutchouc styrène-butadiène polymérisé en solution (S-SBR), caoutchouc styrène-butadiène polymérisé en émulsion (E-SBR), caoutchouc styrène-butadiène carboxylé (X-SBR), ou mélanges de ceux-ci ;
- une quantité comprise entre 2 et 20 pce de ladite charge de renforcement à base de silice blanche ;
- une quantité comprise entre 1 et 4 pce dudit agent de couplage silane de ladite charge de renforcement à base de silice blanche.

**5.** Pneu pour motocycle (1) selon la revendication 4, dans lequel ledit au moins un polymère élastomère diénique comprend une quantité comprise entre 20 et 35 pce dudit au moins un caoutchouc styrène-butadiène.

**6.** Pneu pour motocycle (1) selon l'une quelconque des revendications 4 ou 5, dans lequel ledit caoutchouc styrène-butadiène est un caoutchouc styrène-butadiène polymérisé par émulsion (E-SBR).

**7.** Pneu pour motocycle (1) selon l'une quelconque des revendications 4 à 6, dans lequel ladite composition élastomère vulcanisable comprend une quantité comprise entre 10 et 85 pce, plus préférablement comprise entre 40 et 75 pce, de caoutchouc naturel (NR).

**8.** Pneu pour motocycle (1) selon l'une quelconque des revendications 4 à 7, dans lequel ladite composition élastomère vulcanisable comprend une quantité comprise entre 5 et 15 pce de ladite charge de renforcement à base de silice blanche.

**9.** Pneu pour motocycle (1) selon l'une quelconque des revendications précédentes, dans lequel ladite charge de renforcement à base de silice blanche est choisie parmi la silice, les silicates et des mélanges de ceux-ci.

**10.** Pneu pour motocycle (1) selon l'une quelconque des revendications 4 à 9, dans lequel ladite composition élastomère vulcanisable comprend une quantité comprise entre 2 et 3 pce dudit agent de couplage silane de ladite charge de renforcement à base de silice blanche.

**11.** Pneu pour motocycle (1) selon l'une quelconque des revendications précédentes, dans lequel ladite composition élastomère vulcanisable comprend une quantité comprise entre 40 et 80 pce, plus préférablement comprise entre 50 et 70 pce, d'une charge de renforcement de noir de carbone.

**12.** Pneu pour motocycle (1) selon la revendication 1 ou 2, comprenant en outre au moins un élément structurel choisi parmi une languette (12) et une bandelette talon (13) et dans lequel ledit élément structurel comprend au moins une couche comprenant une pluralité de câblés de renforcement comprenant un ou plusieurs fils textiles comprenant une pluralité de filaments textiles faits d'un matériau choisi parmi la rayonne, le PET, le PEN et le PEEK, et/ou des câblés de renforcement hybrides comprenant une pluralité de filaments textiles faits d'une combinaison de deux ou plus parmi la rayonne, le PET, le PEN et le PEEK, incorporés dans ledit matériau élastomère vulcanisé.

**13.** Pneu pour motocycle (1) selon l'une quelconque des revendications précédentes, dans lequel le pneu présente un rapport de courbure transversale d'au moins environ 0,30 et de préférence compris entre 0,30 et 0,35.

FIG.1

FIG. 2

**EP 4 429 900 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011012944 A
- WO 2020128934 A
- WO 2016174628 A1
- US 2010006200 A1
- WO 2015097582 A1
- US 2013139940 A1
- US 2006137797 A1
- WO 2021090152 A1